# EUROPEAN PATENT APPLICATION

(11) **EP 4 760 897 A1**
(43) Date of publication of application: **17.06.2026**
(21) Application number: 24953257.3
(22) Date of filing: 20.11.2024
(51) Int. Cl.: H01M 50/15

(54) **COVER PLATE ASSEMBLY AND BATTERY**

(30) Priority: 25.10.2024 CN 202422604043 U
(71) Applicant: Eve Power Co., Ltd., Jingmen, Hubei 448000 (CN)
(72) Inventor: FANG, Zhenxing, Jingmen, Hubei 448000 (CN); GUO, Jiahao, Jingmen, Hubei 448000 (CN); SUN, Fei, Jingmen, Hubei 448000 (CN)
(74) Representative: Herrero & Asociados, S.L.
(86) International application number: PCT/CN2024/133095
(87) International publication number: WO 2026/085951

(57) **Abstract**

The present disclosure discloses a cover plate assembly and a battery, the cover plate assembly includes a cover plate body, a monitoring device, a conductive member and a fixing member, the monitoring device is installed on one side of the cover plate body, the monitoring device is located between a first terminal post and a second terminal post on the cover plate body; the conductive member connects the monitoring device, the first terminal post and the second terminal post; the conductive member is located between the cover plate body and the fixing member, and the fixing member is used to fix the conductive member. The present disclosure does not need to set up a separate power supply to power the monitoring device, thereby reducing the number of components.

## Description

This application claims the priority of the Chinese patent application filed with the China Patent Office on October 25, 2024, with application number 2024226040432. The entire contents of the above application are incorporated by reference into this application.

### TECHNICAL FIELD

The present disclosure belongs to the field of battery technologies, and in particular relates to a cover plate assembly and a battery.

### BACKGROUND

With the development of lithium batteries, lithium batteries are widely used in industries such as automobiles, electronic products, and energy storage systems. However, during the use of lithium batteries, safety hazards exist due to imbalance in individual battery cells (such as internal temperature/pressure imbalance, abnormal material precipitation or decomposition, battery corrosion and electrolyte leakage, or abnormal electrical performance, etc.). In related technologies, monitoring devices are configured to collect battery-related information. The safety performance of the battery is assessed based on the collected relevant information and corresponding safety treatment measures are taken in a timely manner.

### TECHNICAL PROBLEM

Monitoring devices installed inside the battery require a power supply to operate. However, the internal space of the battery is limited, making the operation difficult.

### TECHNICAL SOLUTION

The present disclosure provides a cover plate assembly, including:
A cover plate body, on which a first terminal post and a second terminal post are arranged;
A monitoring device, which is installed on one side of the cover plate body, and the monitoring device is located between the first terminal post and the second terminal post;
A conductive member, connecting the monitoring device with the first terminal post and the second terminal post;
A fixing member, the conductive member is located between the cover plate body and the fixing member, and the fixing member and the cover plate body are detachably connected to fix the conductive member.

An embodiment of the present disclosure also provides a battery, including a cover plate assembly.

### BENEFICIAL EFFECTS

The cover plate assembly and battery are provided in the embodiment of the present disclosure (in the cover plate assembly and battery provided in the embodiment of the present disclosure), the cover plate assembly includes a cover plate body, a monitoring device, a conductive member and a fixing member. A first terminal post and a second terminal post is provided on the cover plate body; the monitoring device is electrically connected to the first terminal post and the second terminal post through the conductive member, the monitoring device is powered by the battery, eliminating the need for a separate power supply to power the monitoring device. Thus, the number of parts is reduced, the cost is reduced. Through a detachably connection between the fixing member and the cover plate body the conductive member is secured, minimizing space occupation within the battery and simplifying installation and removal procedures.

### BRIEF DESCRIPTION OF THE DRAWINGS

FIG. 1 is a schematic structural diagram of a configuration of a cover plate assembly provided in an embodiment of the present disclosure.
FIG. 2 is an exploded view of a configuration of a cover plate assembly provided in an embodiment of the present disclosure.
FIG. 3 is a partial exploded view of a first configuration of a cover plate assembly provided in an embodiment of the present disclosure.
FIG. 4 is a partial exploded view of a second configuration of a cover plate assembly provided in an embodiment of the present disclosure.
FIG. 5 is a schematic structural diagram of a third configuration of a cover plate assembly provided in an embodiment of the present disclosure.
FIG. 6 is an exploded view of FIG. 5.
FIG. 7 is a schematic structural diagram of a fixing member provided in an embodiment of the present disclosure.
FIG. 8 is a schematic structural diagram of a fourth configuration of a cover plate assembly provided in an embodiment of the present disclosure.
FIG. 9 is an exploded view of FIG. 8.

Reference numbers are:
100, Cover plate assembly;
110, Cover plate body; 111, First terminal post; 112, Second terminal post; 113, Mounting groove; 114, Limiting protrusion; 115, Explosion-proof valve;
120, Monitoring device; 121, Acquisition element; 122, Pressure cover; 123, Accommodation space;
130, Conductive member; 131, First conductive sheet; 132, Second conductive sheet;
140, Fixing member; 141, First clasping member; 142, Second clasping member; 143, Pressure plate; 144, Snap-fitting portion; 145, Snap-fit matching portion; 146, First clearance area; 147, Limiting groove;
150. Connecting tab; 151. Second clearance area.

### EMBODIMENTS OF THE INVENTION

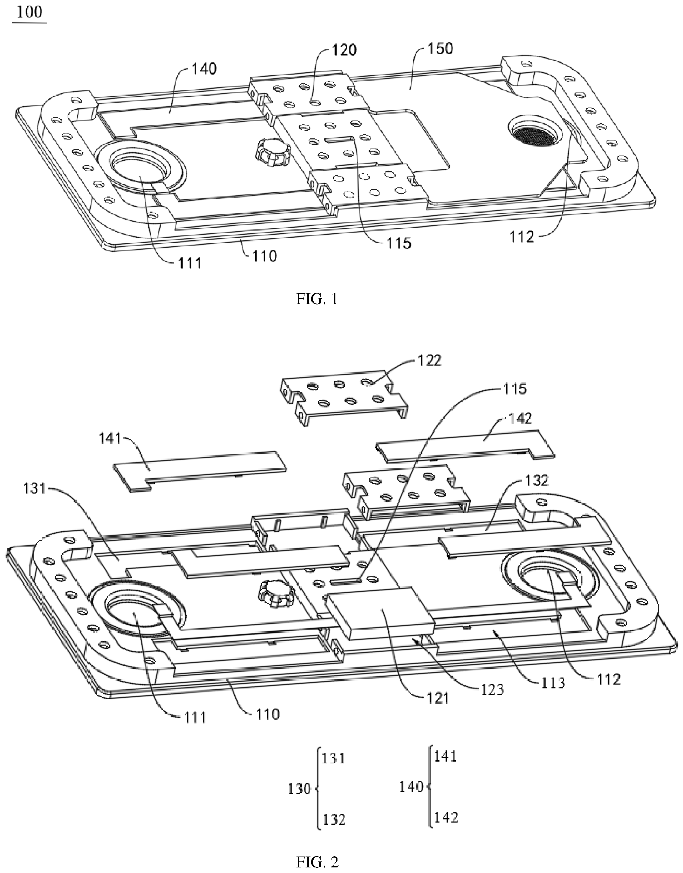

Referring to FIG. 1 and FIG. 2, an embodiment of the present disclosure provides a cover plate assembly 100, which is applied to a battery. The battery includes a cover plate assembly 100, a housing and a battery cell. The cover plate assembly 100 and the housing form an accommodation space. The battery cell is installed in the housing. The cover plate assembly 100 is connected to the battery cell. The cover plate assembly 100 of the embodiment of the present disclosure includes a cover plate body 110, a monitoring device 120, a conductive member 130 and a fixing member 140.

In the present embodiment, referring to FIG. 1, the cover plate body 110 is configured as a rectangular plate structure, and material of the cover plate body 110 is a plastic material. The cover plate body 110 may be a one-layer plate structure, or may be a multi-layer plate structure stacked. The cover plate body 110 is provided with a first terminal post 111 and a second terminal post 112. Along the length direction of the cover plate body 110, the first terminal post 111 and the second terminal post 112 are arranged at intervals. The first terminal post 111 is positioned proximate to one end of the cover plate body 110, and the second terminal post 112 is positioned proximate to the other end of the cover plate body 110. The cover plate body 110 is provided with mounting holes, and the first terminal post 111 and the second terminal post 112 are secured in the corresponding mounting holes, such that the first terminal post 111 and the second terminal post 112 penetrate through upper and lower sides of the cover plate body 110. The first terminal post 111 and the second terminal post 112 may exhibit a cylindrical configuration. The first terminal post 111 and the second terminal post 112 are made of electrically conductive metallic material. The first terminal post 111 and the second terminal post 112 are configured with opposite electrical polarities. For example, the first terminal post 111 serves as a positive terminal post, with the second terminal post 112 correspondingly functioning as a negative terminal post. Alternatively, the first terminal post 111 serves as a negative terminal post, with the second terminal post 112 correspondingly functioning as a positive terminal post. The first terminal post 111 and the second terminal post 112 are configured to electrically connect the positive and negative poles of the battery cell.

In the present embodiment, referring to FIG. 1, the monitoring device 120 is disposed on a cell-proximal side surface of the cover plate body 110. The monitoring device 120 is configured to monitor information within the battery. For example, the information such as the air pressure and temperature in the battery is monitored. Along the length direction of the cover plate body 110, the monitoring device 120 is located between the first terminal post 111 and the second terminal post 112. The monitoring device 120 is spaced from both the first terminal post 111 and the second terminal post 112 on opposite sides by a predetermined distance.

In the present embodiment, referring to FIG. 1 and FIG. 2, the conductive member 130 is disposed on a cell-proximal side of the cover plate body 110. The conductive member 130 connects the monitoring device 120 with the first terminal post 111 and the second terminal post 112. The conductive member 130 is made of electrically conductive metallic material, and the conductive member 130 may be a long strip-shaped conductive sheet configuration. The monitoring device 120 is electrically connected to the first terminal post 111 and the second terminal post 112 through the conductive member 130, so that the battery supplies power to the monitoring device 120.

In the present embodiment, referring to FIG. 1 and FIG. 2, the conductive member 130 is disposed on a cell-proximal side surface of the cover plate body 110, and the conductive member 130 is located between the cover plate body 110 and the fixing member 140. The fixing member 140 is detachably connected to the cover plate body 110 to secure the conductive member 130.

In the embodiment of the present disclosure, the conductive member 130 enables the electrical interconnection of the monitoring device 120 with both the first terminal post 111 and the second terminal post 112, and the battery is used as the power supply for the monitoring device 120. This configuration eliminates the necessity for a dedicated external power supply, thereby reducing component count and lowering costs. The conductive member 130 is secured to the cover plate body 110 by the fixing member 140, which facilitates the installation and removal of the conductive member 130.

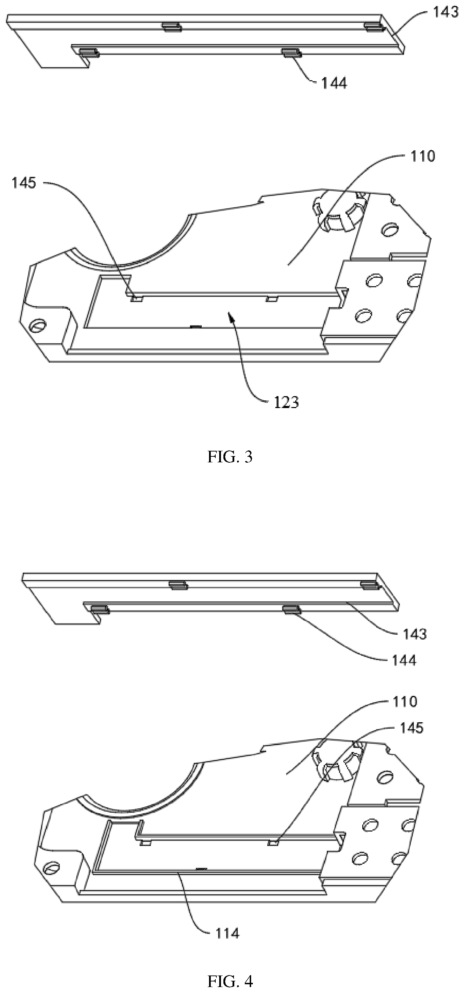

In some embodiments, referring to FIG. 2 and FIG. 3, the cover plate body 110 is formed with a mounting groove 113 on the side close to the battery cell, and the shape of the mounting groove 113 matches the shape of the conductive member 130. For example, the conductive member 130 is L-shaped, and correspondingly, the shape of the mounting groove 113 is also L-shaped. The conductive member 130 is installed within the mounting groove 113. The fixing member 140 can be detachably connected to the cover plate body 110 around the mounting groove 113.

In the embodiment of the present disclosure, the mounting groove 113 is provided on the cover plate body 110, and the conductive member 130 is installed in the mounting groove 113. Thus, the vertical space of the battery occupied by the installation of the conductive member 130 and the fixing member 140 is reduced, efficiently utilizing the internal battery space. The mounting groove 113 defines installation position of the conductive member 130, enabling rapid assembly of the conductive member 130.

In some embodiments, the thickness of the cover plate body 110 is D1, the depth of the mounting groove 113 is H, 2 mm ≤D1≤ 10 mm, and 0.3 mm ≤H≤ 0.8 mm. The thickness of the cover plate body 110 refers to the distance between two opposing surfaces at the mounting position of the conductive member 130 on the cover plate body 110, wherein, the value of D1 can be 2 mm, 3 mm, 5 mm, 6 mm, 7 mm, 8 mm, 9 mm, 10 mm or other unspecified values. The value of H can be 0.3 mm, 0.5 mm, 0.6 mm, 0.7 mm, 0.8 mm or other unspecified values.

In the embodiment of the present disclosure, the thickness of the cover plate body 110 is relatively large, and the cover plate body 110 has sufficient thickness to form the mounting groove 113, and the structural strength of the cover plate body 110 can still be ensured after the mounting groove 113 is formed.

In some embodiments, referring to FIG. 4, the cover plate body 110 is provided with limiting protrusions 114 on the side close to the battery cell, and the limiting protrusion 114 is located on both sides of the conductive member 130. The limiting protrusion 114 and the cover plate body 110 form a limiting groove, and the shape of the limiting groove is adapted to the shape of the conductive member 130. With providing the limiting protrusion 114, the installation position of the conductive member 130 can be quickly determined, thus facilitating the rapid installation and removal of the conductive member 130.

In some embodiments, the thickness of the cover plate body 110 is D1, and the protrusion height of the limiting protrusion 114 is D2, wherein 0<D1< 1mm, 1mm≤D1 + D2≤3mm. The value of D1 can be 0.1mm, 0.2mm, 0.3mm, 0.4mm, 0.6mm, 0.7mm, 0.8mm, 0.9mm or other unspecified values. The value of D1 + D2 can be 1mm, 1.5mm, 2mm, 2.8mm, 3mm or other unspecified values.

In the embodiment of the present disclosure, the thickness of the cover plate body 110 is relatively small. By arranging the limiting protrusion 114 on the side of the cover plate body 110 close to the battery cell, it not only positions the conductive member 130 during installation but also enhances the structural strength of the cover plate body 110. The sum of the thickness of the cover plate body 110 and the protrusion height of the limiting protrusion 114 meets the positioning requirements for the conductive member 130 while minimizing the occupation of the battery's vertical space, thereby reducing the negative impact on the dimensions and installation of other internal battery components.

In some embodiments, the conductive member 130 is bonded to the cover plate body 110 by glue, that is, a side of the cover plate body 110 close to the battery cell and a side of the conductive member 130 facing the cover plate body 110 are bonded by glue.

In the embodiment of the present disclosure, the conductive member 130 and the cover plate body 110 are pre-fixed by gluing, and then the fixing member 140 is installed to prevent the conductive member 130 from moving during the installation process, thereby improving the stability of the conductive member 130. In addition, when the side of the cover plate body 110 facing the battery cell is provided with a mounting groove 113 or a limiting protrusion 114, glue is filled in the limiting groove formed by the mounting groove 113 and the limiting protrusion 114 to prevent the glue from overflowing and affecting other components.

In some embodiments, referring to FIG. 1 and FIG. 2, the conductive member 130 includes a first conductive sheet 131 and a second conductive sheet 132. The first conductive sheet 131 is located between the monitoring device 120 and the first terminal post 111, one end of the first conductive sheet 131 is connected to the monitoring device 120, and the other end is connected to the first terminal post 111. The second conductive sheet 132 is located between the monitoring device 120 and the second terminal post 112, one end of the second conductive sheet 132 is connected to the monitoring device 120, and the other end is connected to the second terminal post 112.

Exemplarily, referring to FIG. 1 and FIG. 2, the cover plate assembly 100 includes two monitoring devices 120, and the two monitoring devices 120 are arranged at intervals along the width direction of the cover plate body 110. Each monitoring device 120 is connected to the first terminal post 111 and the second terminal post 112 respectively through a conductive member 130. The first conductive sheet 131 and the second conductive sheet 132 are mirror-symmetrically arranged with the monitoring device 120 as the center. The conductive member 130 includes a first conductive sheet 131 and a second conductive sheet 132, and the first conductive sheet 131 and the second conductive sheet 132 are metal sheet structures. The material of the first conductive sheet 131 and the second conductive sheet 132 can be copper, aluminum or other conductive materials. The first conductive sheet 131 and the second conductive sheet 132 both include a first connecting section and a second connecting section, and the first connecting section is arranged parallel to the long side of the cover plate body 110, and the first connecting section is close to the side of the cover plate body 110. The second connecting section is arranged perpendicularly to the first connecting section, one end of the first connecting section away from the second connecting section is connected to the monitoring device 120, and one end of the second connecting section away from the first connecting section is connected to the first terminal post 111 or the second terminal post 112. A bent structure is provided at one end of the second connecting section away from the first connecting section, so as to facilitate attachment and fixation with surface of the first terminal post 111 or the second terminal post 112.

In some embodiments, referring to FIG. 1 and FIG. 2, the fixing member 140 includes a first clasping member 141 and a second clasping member 142, the first clasping member 141 is detachably connected to the cover plate body 110, and the second clasping member 142 is detachably connected to the cover plate body 110. The first conductive sheet 131 is located between the first clasping member 141 and the cover plate body 110, and the first clasping member 141 secures the first conductive sheet 131. The second conductive sheet 132 is located between the second clasping member 142 and the cover plate body 110, and the second clasping member 142 secures the second conductive sheet 132.

In the embodiment of the present disclosure, the first conductive sheet 131 is secured by the first clasping member 141, and the second conductive sheet 132 is secured by the second clasping member 142, so as to facilitate the installation or removal operation of the conductive member 130.

In some embodiments, referring to FIG. 3 and FIG. 4, the fixing member 140 includes a pressure plate 143 and a snap-fitting portion 144. The pressure plate 143 is provided with the snap-fitting portion 144 on a side proximate to the cover plate body110. And a snap-fit matching portion 145 that engages with the snap-fitting portion 144 is disposed on the cover plate body 110.

Exemplarily, referring to FIG. 1 and FIG. 2, the fixing member 140 includes a first clasping member 141 and a second clasping member 142, and the first clasping member 141 and the second clasping member 142 have the same structure. The first clasping member 141 and the second clasping member 142 both include a pressure plate 143 and a snap-fitting portion 144. The pressure plate 143 is an elongated strip structure made of insulating material. The shape of the pressure plate 143 is the same as the shape of the first conductive sheet 131 or the second conductive sheet 132. For example, the first conductive sheet 131 and the second conductive sheet 132 are "L" shaped, and the corresponding pressure plate 143 is also "L" shaped. One end of the pressure plate 143 abuts against the monitoring device 120, and the other end abuts against the edge of the first terminal post 111 or the second terminal post 112. The width of the pressure plate 143 is slightly larger than the width of the first conductive sheet 131 and the second conductive sheet 132. A plurality of snap-fitting portions 144 are provided on both sides of the pressure plate 143, and the plurality of snap-fitting portions 144 are arranged at intervals along the length direction of the pressure plate 143. The snap-fit matching portion 145 is provided on the cover plate body 110 at a position corresponding to the snap-fitting portion 144. The snap-fitting portion 144 is a snap-fitting protrusion, and the corresponding engaged snap-fit matching portion 145 is a snap-fitting recess. The pressure plate 143 and the cover plate body 110 are snap-fitted and interlocked by the engagement between the snap-fitting portion 144 and the snap-fit matching portion 145, resulting in a simple and user-friendly structure.

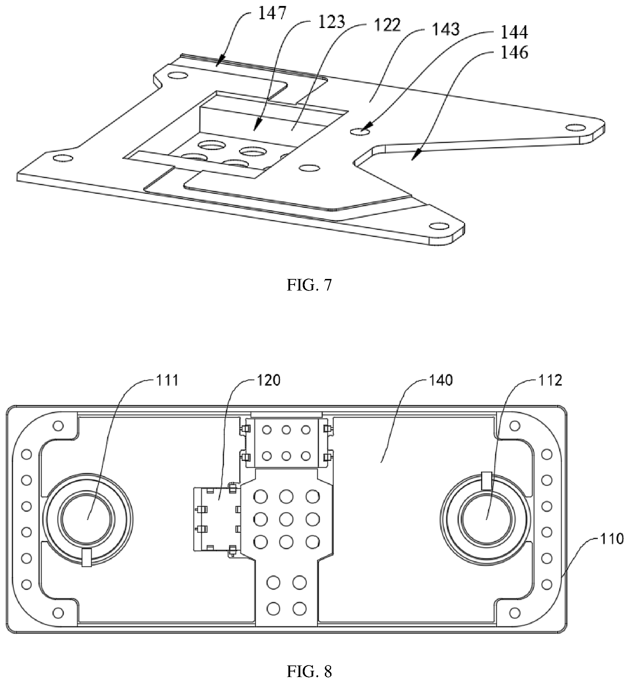

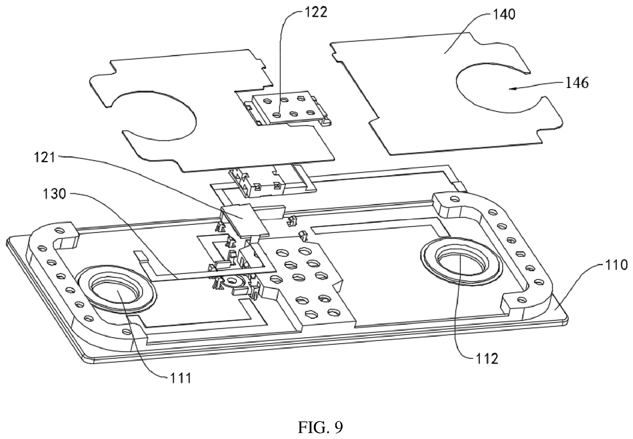

In some embodiments, referring to FIG8 and FIG9, the fixing member 140 is a patch, and a first clearance area 146 is provided on the patch, and the first terminal post 111 or the second terminal post 112 is located in the first clearance area 146. The patch is fixedly attached to the cover plate body 110, and the conductive member 130 is secured between the patch and the cover plate body 110.

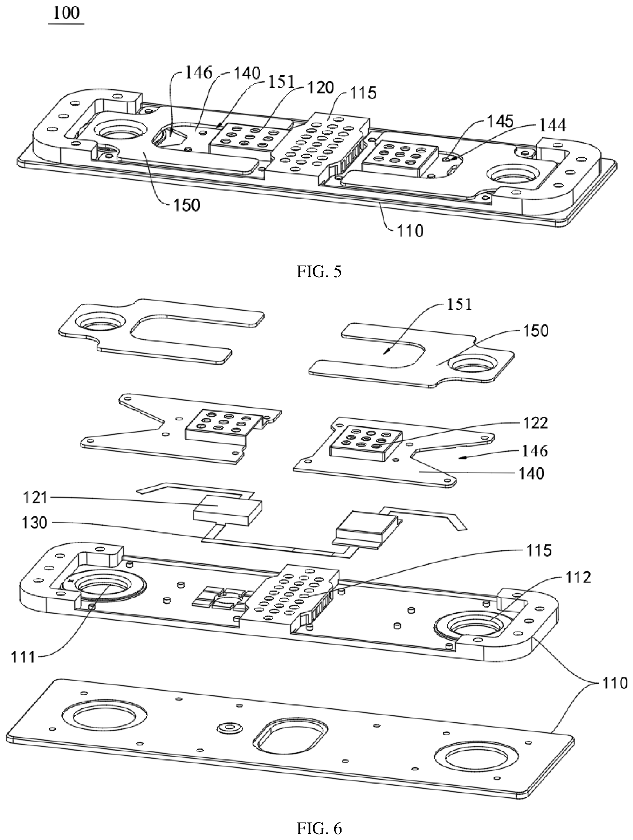

In some embodiments, referring to FIG. 6 and FIG. 7, the pressure plate 143 is provided with a first clearance area 146, and the first terminal post 111 or the second terminal post 112 is located in the first clearance area 146.

Exemplarily, the pressure plate 143 is a rectangular plate structure, a first clearance area 146 is provided on the pressure plate 143, and the first terminal post 111 or the second terminal post 112 is located in the first clearance area 146 to avoid interference between the pressure plate 143 and the first terminal post 111 or the second terminal post 112. The opening at the end of the first clearance area 146 adjacent to the monitoring device 120 is smaller than the opening at the opposite end. At this time, the snap-fit matching portion 145 on the cover plate body 110 is a snap-fit protrusion, and the snap-fitting portion 144 on the pressure plate 143 is a limiting through-hole.

In some embodiments, referring to FIG7, a limiting groove 147 is provided on the side of the pressure plate 143 facing the cover plate body 110, and the conductive member 130 is located in the limiting groove 147. The shape and size of the conductive member 130 are adapted to the shape and size of the limiting groove 147, and the conductive member 130 is positioned by the limiting groove 147, so that the conductive member 130 can be quickly installed.

In some embodiments, referring to FIG. 2, FIG. 6 and FIG. 9, the monitoring device 120 includes an acquisition element 121 and a pressure cover 122, and the pressure cover 122 and the cover plate body 110 enclose an accommodation space 123, and the acquisition element 121 is located in the accommodation space 123. The acquisition element 121 is a sensor, such as an air pressure sensor or a temperature sensor, etc. The pressure cover 122 is detachably connected to the cover plate body 110, which facilitates the installation and removal of the acquisition element 121.

In some embodiments, the fixing member 140 and the pressure cover 122 are integrally formed.

Exemplarily, referring to FIG. 5 and FIG. 6, two monitoring devices 120 are provided, and the two monitoring devices 120 are provided at intervals along the length direction of the cover plate body 110. Two fixing members 140 are provided, and one fixing member 140 corresponds to one monitoring device 120. The fixing member 140 includes a pressure plate 143 and a snap-fitting portion 144, and the pressure plate 143 and the pressure cover 122 are integrally formed by injection molding. The pressure plate 143 of the fixing member 140 and the pressure cover 122 are integrally formed, and the components achieve a high level of integration, which facilitates the overall installation and removal of the fixing member 140 and the pressure cover 122.

In some embodiments, referring to Fig. 1, Fig. 2, Fig. 5 and Fig. 6, an explosion-proof valve 115 is further provided on the cover plate body 110, and the monitoring device 120 is located on at least one side of the explosion-proof valve 115. For example, the explosion-proof valve 115 is provided near the middle of the cover plate body 110, and two monitoring devices 120 are provided. Along the width direction or the length direction of the cover plate body 110, the two monitoring devices 120 are correspondingly provided on both sides of the explosion-proof valve 115.

In some embodiments, the width of the cover plate body 110 is L, and the width of the monitoring device 120 is 1, wherein 0<1≤0.3L, and the monitoring device 120 is located on one side of the explosion-proof valve 115 along the width direction of the cover plate body 110. The width of the monitoring device 120 refers to the distance between the two sides of the monitoring device 120 along the width direction of the cover plate body 110. The value of 1 can be 0.1L, 0.2L, 0.3L or other unspecified values.

In some embodiments of the present disclosure, when the dimensions of the monitoring device 120 and the cover plate body 110 satisfy the above relationship, arranging the monitoring device 120 on one side of the explosion-proof valve 115 along the width direction of the cover plate body 110 ensures that the existing components within the battery can retain their original dimensions while accommodating the installation of the monitoring device 120. The configuration of the monitoring device 120 exhibits high compatibility with existing battery production lines, thereby reducing processing costs.

In some embodiments, referring to Fig. 1 and Fig. 5, the cover plate assembly 100 further includes a connecting tab 150, which is located on the side of the fixing member 140 away from the cover plate body 110, and the connecting tab 150 is connected to the first terminal post 111 and the second terminal post 112. The connecting tab 150 is configured to connect the first terminal post 111 and the second terminal post 112 to the battery cell.

In some embodiments, referring to FIG. 5 and FIG. 6, a second clearance area 151 is provided on the connecting tab 150, and the monitoring device 120 is located in the second clearance area 151. The second clearance area 151 has a U-shaped or rectangular configuration. To avoid interference between the connecting tab 150 and the monitoring device 120, the components in the battery are arranged compactly and occupy a small space.

The present disclosure also provides a battery, including the cover plate assembly 100 of any one of the above embodiments. The battery in some embodiments of the present disclosure has the same technical effect as the cover plate assembly 100 of the above embodiments, which will not be described in detail.

## Claims

1. A cover plate assembly (100), comprising:
A cover plate body (110), on which a first terminal post (111) and a second terminal post (112) are arranged;
A monitoring device (120), which is installed on one side of the cover plate body (110), and the monitoring device (120) is located between the first terminal post (111) and the second terminal post (112);
A conductive member (130), which connects the monitoring device (120) with the first terminal post (111) and the second terminal post (112);
A fixing member (140), wherein the conductive member (130) is located between the cover plate body (110) and the fixing member (140), and the fixing member (140) is detachably connected to the cover plate body (110) to fix the conductive member (130).

2. The cover plate assembly (100) according to claim 1, wherein a mounting groove (113) is provided on one side surface of the cover plate body (110), and the conductive member (130) is installed in the mounting groove (113).

3. The cover plate assembly (100) according to claim 2, wherein thickness of the cover plate body (110) is D1, depth of the mounting groove (113) is H, wherein 2 mm ≤ D1 ≤ 10 mm, and 0.3 mm≤H≤0.8 mm.

4. The cover plate assembly (100) according to any one of claims 1 to 3, wherein a limiting protrusion (114) is provided on one side surface of the cover plate body (110), and the limiting protrusion (114) is located on both sides of the conductive member (130).

5. The cover plate assembly (100) according to claim 4, wherein thickness of the cover plate body (110) is D1, protrusion height of the limiting protrusion (114) is D2, wherein 0<D1<1mm, 1mm≤D1+D2≤3mm.

6. The cover plate assembly (100) according to any one of claims 1 to 5, the conductive member (130) and the cover plate body (110) are bonded together by glue.

7. The cover plate assembly (100) according to any one of claims 1 to 6, wherein the conductive member (130) comprises a first conductive sheet (131) and a second conductive sheet (132), one end of the first conductive sheet (131) is connected to the monitoring device (120), and the other end is connected to the first terminal post (111), and one end of the second conductive sheet (132) is connected to the monitoring device (120), and the other end is connected to the second terminal post (112).

8. The cover plate assembly (100) according to claim 7, wherein the fixing member (140) comprises a first clasping member (141) and a second clasping member (142) which are respectively detachably connected to the cover plate body (110), the first conductive sheet (131) is located between the first clasping member (141) and the cover plate body (110), and the second conductive sheet (132) is located between the second clasping member (142) and the cover plate body (110).

9. The cover plate assembly (100) according to any one of claims 1 to 6, wherein the fixing member (140) comprises a pressure plate (143) and a snap-fitting portion (144), wherein the pressure plate (143) is provided with the snap-fitting portion (144) on a side proximate to the cover plate body (110), and the cover plate body (110) is provided with a snap-fit matching portion (145) that engages with the snap-fitting portion (144).

10. The cover plate assembly (100) according to claim 9, wherein the pressure plate (143) is provided with a first clearance area (146), and the first terminal post (111) or the second terminal post (112) is located in the first clearance area (146).

11. The cover plate assembly (100) according to claim 9 or 10, wherein a limiting groove (147) is provided on a side of the pressure plate (143) facing the cover plate body (110), and the conductive member (130) is located in the limiting groove (147).

12. The cover plate assembly (100) according to any one of claims 1 to 11, wherein the monitoring device (120) comprises an acquisition element (121) and a pressure cover (122), the pressure cover (122) and the cover plate body (110) enclose an accommodation space (123), and the acquisition element (121) is located in the accommodation space (123).

13. The cover plate assembly (100) according to claim 12, wherein the fixing member (140) and the pressure cover (122) are integrally formed.

14. The cover plate assembly (100) according to any one of claims 1 to 13, wherein the cover plate body (110) is further provided with an explosion-proof valve (115), and the monitoring device (120) is located on at least one side of the explosion-proof valve (115).

15. The cover plate assembly (100) according to claim 14, wherein the width of the cover plate body (110) is L, the width of the monitoring device (120) is 1, wherein 0<1≤0.3L, and along the width direction of the cover plate body (110), the monitoring device (120) is located on one side of the explosion-proof valve (115).

16. The cover plate assembly (100) according to any one of claims 1 to 15, further comprising a connecting tab (150) located on a side of the fixing member (140) away from the cover plate body (110), wherein the connecting tab (150) is connected to the first terminal post (111) and the second terminal post (112).

17. The cover plate assembly (100) according to claim 16, **characterized in that** a second clearance area (151) is provided on the connecting tab (150), and the monitoring device (120) is located in the second clearance area (151).

18. A battery, comprising: a cover plate assembly (100) according to any one of claims 1 to 17.
